Europäisches Patentamt

European Patent Office (11) Publication number: **0 018 366**

Office européen des brevets **B1**

(19)

(12) **EUROPEAN PATENT SPECIFICATION**

(45) Date of publication of patent specification: **01.06.83**     (51) Int. Cl.³: **C 02 F 1/72**

(21) Application number: **79900328.0**

(22) Date of filing: **16.03.79**

(86) International application number:
**PCT/US79/00168**

(87) International publication number:
**WO 79/00791 18.10.79 Gazette 79/21**

(54) **METHOD AND APPARATUS FOR EFFECTING SUBSURFACE, CONTROLLED, ACCELERATED CHEMICAL REACTIONS.**

<table>
<tr><td>

(30) Priority: **17.03.78 US 887506**

(43) Date of publication of application:
**12.11.80 Bulletin 80/23**

(45) Publication of the grant of the patent:
**01.06.83 Bulletin 83/22**

(84) Designated Contracting States:
**CH DE FR GB SE**

(56) References cited:
**EP - A - 0 003 787**
**US - A - 1 291 130**
**US - A - 2 315 577**
**US - A - 2 665 249**
**US - A - 2 773 026**
**US - A - 3 160 685**
**US - A - 3 246 761**
**US - A - 3 449 247**
**US - A - 3 464 885**

The file contains technical information submitted after the application was filed and not included in this specification

</td><td>

(73) Proprietor: **McGREW, Jay, Lininger**
**12213 Maxwell Hill Road**
**Littleton, CO 80120 (US)**

(72) Inventor: **McGREW, Jay, Lininger**
**12213 Maxwell Hill Road**
**Littleton, CO 80120 (US)**

(74) Representative: **Watkins, Arnold Jack et al,**
**European Patent Attorney Frank B. Dehn & Co.**
**Imperial House 15-19 Kingsway**
**London WC2B 6UZ (GB)**

(56) References cited:
**US - A - 3 606 999**
**US - A - 3 804 255**
**US - A - 3 853 759**
**US - A - 4 042 510**
**US - A - 4 272 383**
**US - A - 89 522 9**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Method and apparatus for effecting subsurface, controlled, accelerated chemical reactions

This invention generally relates to improvements in effecting chemical reactions and more particularly to a novel and improved method and apparatus for effecting accelerated chemical reactions between at least two reactants that is especially effective in efficiently carrying out the wet oxidation of sewage sludge and like waste streams, purifying the water content, and also recovering energy in the form of heat.

There are a variety of chemical reactions that may be accelerated under conditions of a temperature substantially above ground surface ambient temperature and a pressure substantially above atmospheric pressure. A major part of the reactor apparatus heretofore provided for carrying out the various chemical reactions at higher temperatures and pressures typically require high pressure liquid pumps, high pressure, high temperature heat exchangers and pressure vessels with rotating seals and considerable land surface area.

One chemical reaction for which the method and apparatus of the present invention is particularly suitable is for the direct wet oxidation of materials in a waste stream and particularly the direct wet oxidation of sewage sludge.

The Zimpro method, Barber-Coleman process and Navy shipboard processors are examples of current methods used to effect direct wet oxidation of sewage sludge and all involve placing the waste in a high temperature, high pressure reactor at substantially ground surface level. Air is pumped into the reactor vessel and heat is externally applied. Constant mechanical stirring is required to mix oxygen, a reactant, into the liquid and to remove carbon dioxide, a product of the reaction.

Some attempt has been made to carry out accelerated chemical reactions below the ground surface level using the increased pressures provided by a hydrostatic column of liquid or fluid. This is the kind of method with which the present invention is particularly concerned and consists of flowing an influent fluid with at least two reactants downwardly through a downgoing flow passage at a selected flow rate to a selected depth below the ground surface in a subterranean hole to form a hydrostatic column of fluid exerting a pressure and provide a temperature sufficient to cause the reactants at said selected depth to react in a reaction at an accelerated reaction rate and flowing the heated fluid and reaction products back up to substantially ground surface level in an upgoing flow passage in heat exchange relation to the downflowing fluid as an effluent fluid.

The apparatus used for this method is of the kind comprising a reactor disposed in a subterranean hole and including first and second pipe portions defining a downgoing flow passage and an upgoing flow passage said downgoing flow passage extending from substantially the ground surface to a depth sufficient to cause a downflowing fluid therein in use to form a hydrostatic column of fluid to exert a pressure and provide a temperature sufficient to cause two reactants in the fluid at said selected depth to react at an accelerated rate, and means for pumping an influent fluid with at least two reactants from substantially the ground surface level through said downgoing and upgoing passages whereby, in use an effluent fluid with reaction products is passed from said reactor.

A method and apparatus of this general kind are disclosed in United States Patent Specification No. 3,606,999. In this disclosure an outer vessel is embedded in a subterranean hole and an inner pipe extends down within the vessel to substantially the bottom of the vessel. The influent fluid moves down through the inner pipe and up through the passage between the inner pipe and the outer vessel to show a one-stage heat exchange. The apparatus of this disclosure however suffers from the problem of sharply increasing pressures as temperature increases at the lower depths. There is no control criteria in terms of vapor pressure, local temperature and local pressure to provide for a point-by-point temperature control along the reaction zone. Furthermore the outer vessel is intimately tied to the subterranean hole, preventing up and down movement of the vessel to thermally expand and contract, and conducting heat from the vessel making temperature control impossible and necessitating in certain circumstances the provision of extra insulation at the reaction zone or the provision of a double-walled vessel in this region.

A similar apparatus is disclosed in United States Patent Specification No. 3,464,885. This however is subject to the disadvantages mentioned above. Furthermore the inner passage extends substantially to the bottom of the outer vessel and moreover the nature of the heat exchange jacket around the inner passage is such that the desirable high operating temperatures at the bottom of the vessel will not be reached.

A further subterranean reactor is disclosed in United States Patent Specification No. 3,853,759. Again however in this reactor the outer vessel is embedded in the subterranean hole and there is no effective control of reaction temperatures or pressures.

The object of the invention is to provide a method of effecting accelerated chemical reactions which is a substantial improvement over the known prior art in terms of efficiency. This is achieved in a method of the kind referred to above, by passing said fluid further down through a reaction zone extending through said downgoing flow passage a selected distance below said selected depth whereby reaction products are produced and the fluid is heated in said reaction zone, by said reaction being carried out with said downgoing and upgoing flow passages suspended from above in said subterranean hole and in spaced relation to said hole and by controlling the temperature of the influent fluid in said reaction zone by adding heat to or removing heat from said influent fluid substantially in the area of said reaction zone to accomplish a maximum reaction rate with the vapor pressure of the influent fluid at the local temperature being maintained always lower than the local pressure to prevent boiling of said influent fluid. Equally the apparatus of the invention is characterised in that said reactor is suspended from above in said subterranean hole and in spaced relation to said hole, in that said downgoing flow passage extends down from said selected depth to form a reaction zone whereby, in use reaction products are produced and said fluid is heated in said reaction zone, and in that means are provided for controlling, in use the temperature of the influent fluid in said reaction zone by adding heat to or removing heat from the influent fluid in the area of the reaction zone to maintain, in use a substantially maximum reaction rate without boiling of the fluid in said reaction zone.

If a gas is used in the reaction, the results are enhanced by introducing a stream of gas under low pressure in the form of a series of enlarged bubbles, known as "Taylor bubbles", formed at the top of the reactor. Preferably the gas is introduced in a plurality of streams at more than one elevation to reduce pumping requirements. These enlarged bubbles cause the least amount of pressure differential in the flow passage and thus minimize pumping pressure to maintain a certain flow rate. These enlarged bubbles also provide intense mixing and contacting to increase the flow of reactants and products to and from the fluid since the fluid flows over the bubble and there is no boundary layer formed as is found in bubbles of smaller size. The quantity of gas injected is controlled to provide the proper ratios relative to the influent fluid since insufficient gas produces undesirable products and excess gas is wasted and reduces the reactor throughput rate. Fluid flow velocities are maintained at a greater velocity than the bubble rise velocity in order to carry each bubble down to the reaction zone. Pressure and flow rate at the output of the reactor are controlled to maintain the proper flow rates and pressure in the system.

Other objects, advantages and capabilities of the present invention will become more apparent as the description proceeds, taken in conjunction with the accompanying drawings in which like parts have similar reference numerals and in which:

Figure 1 is a schematic diagram of apparatus embodying features of the present invention which utilizes a gas as one reactant;

Figure 2 is an enlarged schematic diagram of the apparatus of Figure 1 showing in more detail the manner of introducing a gas under pressure into the fluid stream to produce enlarged bubbles which flow down the outer flow passage and up the inner flow passage;

Figure 3 is an enlarged schematic diagram showing the passages and bubbles with the flow in the opposite direction from that of Figure 2;

Figure 4 is a schematic diagram of the reactor with designations at various depth locations for reference to the structure shown in more detail in Figures 5—19;

Figure 5 is a vertical cross-sectional view of an upper portion of the reactor;

Figure 6 is a cross-sectional view taken along lines 6—6 of Figure 5;

Figure 7 is a vertical cross-sectional view of an intermediate portion of the reactor;

Figure 8 is a vertical cross-sectional view of a lower portion of the reactor;

Figure 9 is a vertical sectional view taken along lines 9—9 of Figure 7;

Figure 10 is a sectional view taken along lines 10—10 of Figure 9;

Figure 11 is a sectional view taken along lines 11—11 of Figure 7;

Figure 12 is a sectional view taken along lines 12—12 of Figure 7;

Figure 13 is a sectional view taken along lines 13—13 of Figure 8;

Figure 14 is a sectional view taken along lines 14—14 of Figure 8;

Figure 15 is a sectional view taken along lines 15—15 of Figure 8;

Figure 16 is an enlarged vertical cross-sectional view of Figure 13 showing in more detail the flow of fluid between the jacket and flow line;

Figure 17 is a sectional view taken along lines 17—17 of Figure 8;

Figure 18 is a sectional view taken along lines 18—18 of Figure 17;

Figure 19 is a perspective view of the bottom of the jacket of the reactor;

Figure 20 is an enlarged side elevational view of a Taylor bubble;

Figure 21 is a bottom view of the bubble shown in Figure 20; and

Figure 22 is a diagrammatic view showing three reactors connected in series and placed in one outer casing.

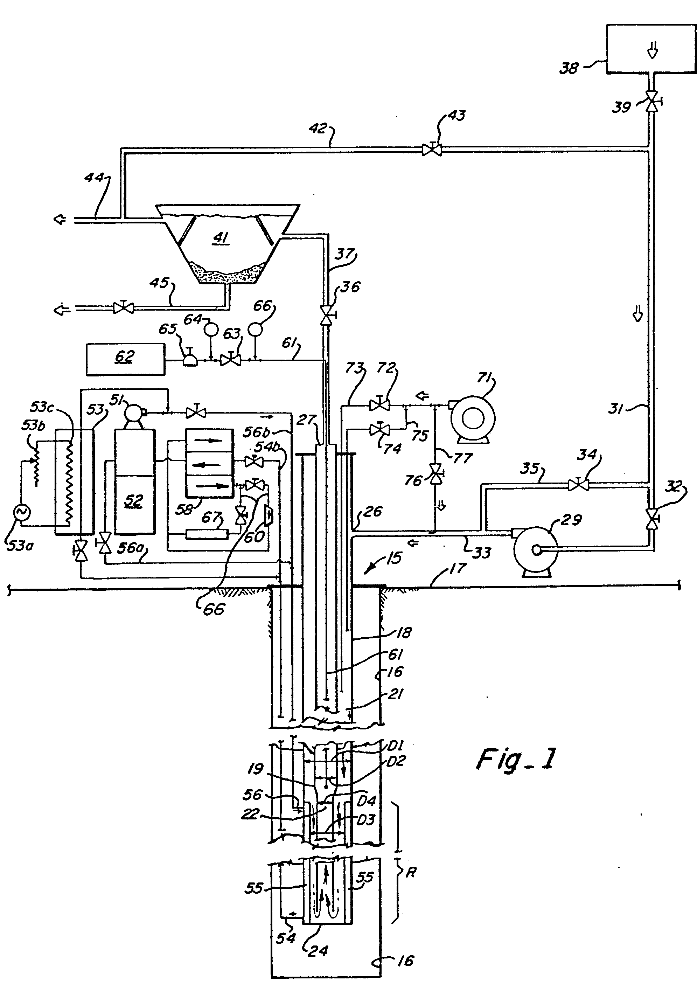

Referring now to Figure 1, the schematic diagram shows a reactor 15 constructed and arranged in accordance with the present invention that extends into a vertical hole 16 in the earth to a substantial extent below the ground surface level designated 17. The reactor 15 shown in general has an outer pipe portion 18 and an inner pipe portion 19 in spaced concentric relation with the outer pipe portion 18 defining an outer flow passage 21 between the outer and inner pipe portions and an inner flow passage 22 through the inner pipe portion 19.

The outer pipe portion 18 has a closure cap 24 covering the lower end thereof and the inner pipe portion 19 terminates a selected distance above the closure cap 24 to form a subsurface, hydraulic U-tube structure within hole 16.

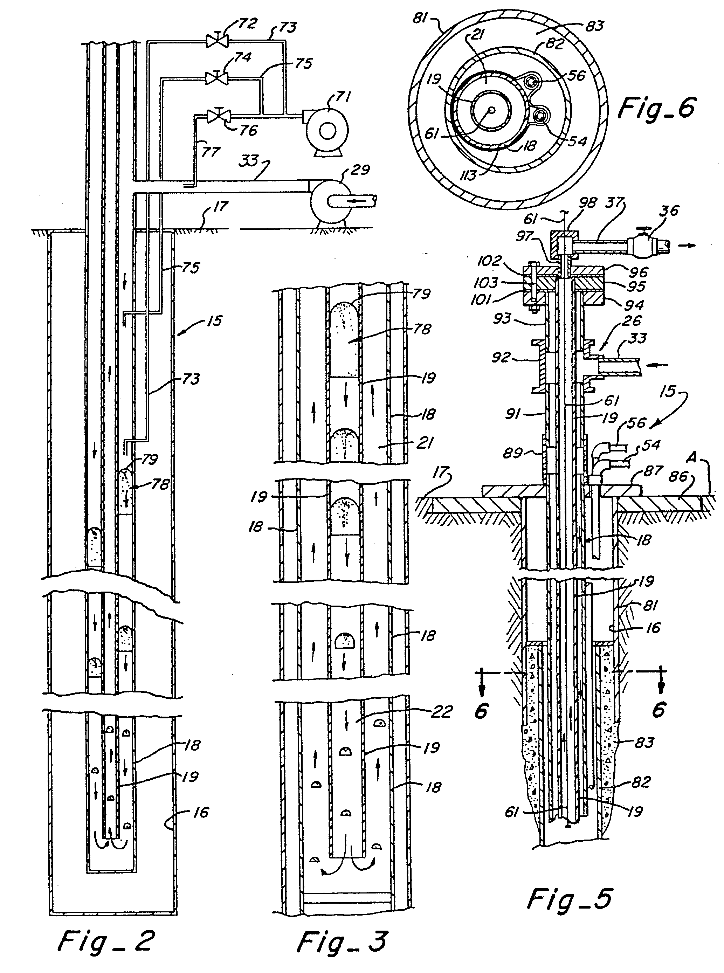

The reactor 15 shown further has an upper portion projecting above the ground surface level 17 provided with a port 26 in flow communication with the outer flow passage 21 through which an influent fluid is shown as flowing, as indicated by arrows, and a port 27 in flow communication with the inner flow passage 22 through which the effluent fluid is shown as flowing, as indicated by arrows. While the direction of the arrows shows the flow of the influent fluid down the outer flow passage 21 and up the inner flow passage 22, this provides a greater input flow capacity for influent fluids, which usually have a greater viscosity than effluent fluids, but it is understood that the direction of fluid flow can be reversed as illustrated in Figure 3.

A low-pressure pump 29 at the ground surface level is provided to pump the influent fluid supplied from a suitable supply indicated at 38 via a supply flow line 31 with a pressure control valve 32 at a selected pressure through port 26 via a flow line 33 coupled between the pump and port 26 and down the outer flow passage 21, as indicated by arrows. A bypass control valve 34 in a bypass line 35 bypasses the pump 29 for flow directly from flow line 31 to flow line 33 since, after the fluid is flowing through the U-tube structure, in many instances no pumping pressure will be required to sustain a continuous flow therethrough. A back pressure control valve 36 in an outlet flow line 37 from outlet 27 controls the flow rate and pressure of the effluent fluid flowing up through flow passage 22 by virtue of the size of the orifice therethrough. A supply of influent fluid is indicated at 38, and the flow therefrom into flow line 31 is controlled by control valve 32. The pump 29 controls the pressure and flow rate through flow line 33 during start-up and valves 34 and 36 control the pressure and flow rate during operation.

The apparatus shown in Figure 1 is suitable for carrying out the direct wet oxidation of a waste stream and particularly aerobic sewage treatment plant sludge waste, although it is understood that the present invention is capable of carrying out a variety of high-temperature, high-pressure chemical reactions.

In the illustrated flow diagram where a sewage sludge stream is being processed, the effluent fluid passing through flow line 37 is passed into an ash settling tank 41 with clean water being recycled back as a clean or purified diluent to the feed flow line 31 via a flow line 42 with a control valve 43 to control the concentration of the influent fluid so that the settings of valves 39 and 43 achieve a blend of influent fluid having a selected C.O.D. The mass of oxygen required to complete the oxidation reaction is termed the "chemical oxygen demand" (C.O.D.) of the sewage sludge. The settling tank 41 has a purified water discharge flow line 44 and an ash flow line 45.

Temperature control apparatus is provided for controlling the temperature of the influent fluid in the reaction zone designated R. This temperature control apparatus includes a coolant pump 51 at the ground surface level that pumps a coolant fluid stored in a ground level coolant tank 52 through a heater 53 at the ground surface level down to the bottom of a heat exchange jacket 55, through a valve-controlled flow line 54, and back up the hole through a valve-controlled flow line 56.

The heater 53 may take a variety of forms but, as illustrated schematically, is an electric heater supplied electric power from a power source 53a with a control rheostat 53b for regulating the voltage applied to a heating element 53c to change the heater temperature setting and thereby the temperature of the coolant fluid flowing in flow line 54. The jacket 55 is of a hollow, annular, tubular construction that is substantially coextensive with the reaction zone R and further is in heat exchange relation with the outer flow passage 21, as is described more fully hereinafter.

The other flow line 56 is coupled to and extends from the top of the jacket at the top of the reactor zone up to the ground surface level and is coupled to tank 52 by a return valve-controlled flow line 56a to add heat to a fluid in lines 54 and 56. A heat removal circuit includes a valve-controlled flow line 56b coupled to line 56 down to the top of the jacket 55 and a valve-controlled flow line 54b above the ground surface coupled to a heat exchanger 58 which in turn is coupled to tank 52 to provide a closed-loop, fluid flow temperature control circuit. The flow control valve in flow line 54b controls the rate of flow in this fluid flow circuit.

By means of regulating the temperature of the coolant fluid in the jacket 55 and flow lines 54 and 56, the temperature of the influent fluid in the reaction zone R is controlled. This is accomplished by adding or removing heat to and from the coolant fluid and is controlled to accomplish substantially a maximum reaction rate with the vapor pressure of the influent fluid at the local temperature being maintained always lower than the local pressure to prevent boiling of the influent fluid. The temperature of the influent fluid is increased by adding heat provided by the heater 53 that heats the coolant fluid passing through flow line 54 and down into jacket 55 by the pressure supplied by pump 51, with the flow rate of the coolant fluid controlled by the setting of the control valve in line 54.

The upper limit of the temperature of the influent fluid in the reaction zone is controlled by regulating the heat removed from the heat exchanger 58 and the flow rate which is controlled by the setting of the valve in line 54b.

The amount of heat removed is directly related to the setting of the valve in line 54b. A turbine 60 is shown coupled to the heat exchanger 58 via a flow line with a control valve 66 as an illustration of the utilization of the energy, and specifically the heat produced by the reaction, to convert heat energy to mechanical energy. Alternatively, a load 67 is shown coupled to the heat exchanger via a flow line with a control valve which could be a room heated by the heat produced by the reactor.

A pressure sensor for measuring the pressure at the upper limit or beginning of the reaction zone R includes a small-diameter tube 61, such as a .3175 cm stainless steel tube, that extends down through the inner pipe portion 19 to the upper limit of the reaction zone R. At the ground surface level a pressurized bottle 62 provides a selected air pressure to flow air down through the tube 61 via a delivery valve 63. Between the bottle 62 and tube 61 there is coupled a delivery air pressure gauge 64 and a pressure regulator 65. To make a pressure reading, water is flushed out of the tube 61 and the delivery valve 63 is closed. The reading on the pressure gauge 66 is the pressure inside the reactor at the upper limit or top of the reaction zone which is a critical part of the temperature and pressure for the reactor.

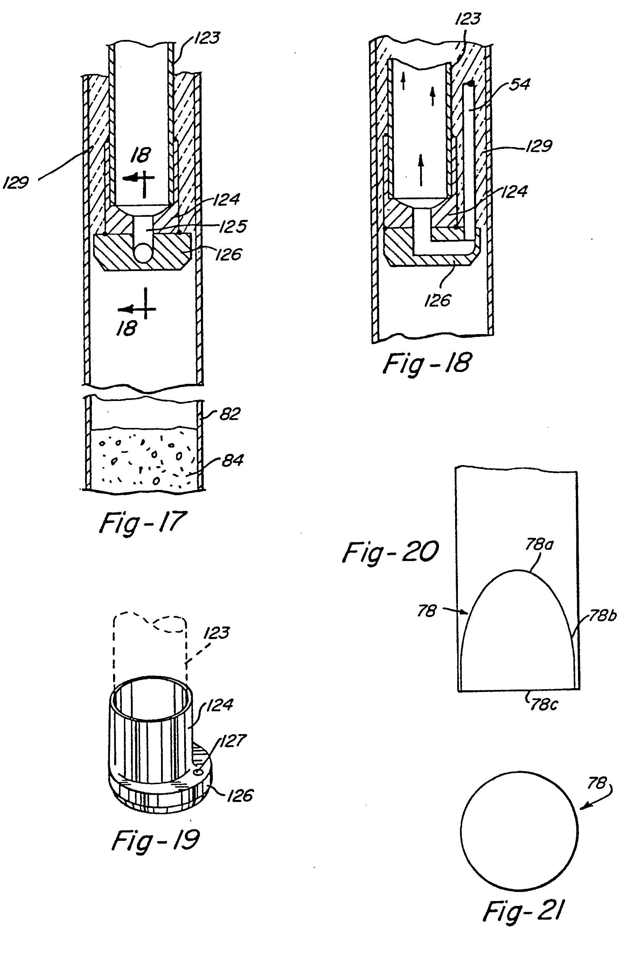

In the chemical reactions where a gas is used as a reactant, and specifically in carrying out the wet oxidation of sewage sludge where the oxygen content of air is required, it has been found that the operation and results are significantly enhanced by the use of enlarged gas bubbles 78. With specific reference to Figures 20 and 21, these bubbles are characterized by a shape that has a generally spherical cap portion 78a, a generally cylindrical main body portion 78b, and a truncated bottom portion 78c. The transverse cross section is circular. In the enlarged view, it is shown that the body portion diverges from the top portion to the base portion along a curve. This bubble is frequently referred to as the "Taylor bubble" after G. J. Taylor who is credited for accomplishing their original investigation. The Taylor bubbles are compressed as they flow down through the outer flow passage and, upon reaching the reaction zone, the oxygen carried therein is a reactant in a reaction which causes an intense mixing, contacting and a rapid oxidation of the sewage sludge with smaller bubbles returning via the inner passage.

The principal advantages of the use of these bubbles as compared to a swarm of very fine bubbles are that the pressure drop per length of pipe for the Taylor bubble is considerably less, thereby reducing the pumping requirements to pump the fluid and bubbles down into the earth, and further there is accomplished a greater total mass transfer between the gas and the liquid phase in the reaction zone R. This results in an increased gas-liquid mixing with greater dissolving of the gas in the liquid and a greater removal of the reaction products from the liquid.

The apparatus shown that is utilized for forming these enlarged bubbles is an air compressor 71 at the ground surface which, through one or more flow lines, delivers one or more streams of air at a selected pressure into the upper portion of the outer flow passage to combine with the influent fluid from the input flow line 33. A series or train of enlarged or Taylor bubbles 78 are formed that are carried down with the influent fluid.

For this purpose, there is shown a control valve 76 in a flow line 77 that extends into flow line 33 at ground level and a control valve 74 in flow line 75 extending to one depth below the earth's surface, as well as a control valve 72 in line 73 extending yet further into the earth's surface. A terminal pipe section or portion of each of the flow lines 73, 75 and 77 extends in a longitudinal relation to and within the downgoing flow passage with an outlet opening toward the downstream end of the downgoing flow passage so that a stream of air is introduced under a selected pressure and flow rate into the influent fluid stream. By the proper selection of pressure, temperature and flow rate in relation to the flow rate and pressure of the influent fluid, bubbles coalesce into a train of Taylor bubbles 78 arranged at spaced intervals along the outer flow passage 21.

These enlarged or Taylor bubbles will rise at a uniform rate with respect to water. Their relative velocity with respect to water is given by:

$$v = .14\sqrt{g_c r}$$

where:

$g_c = 9.806 \ m \cdot s^{-2}$
$r =$ pipe inside radius (m)

In the apparatus shown the flow velocity of the influent fluid waste stream must be maintained at a greater value than the bubble rise velocity in order to carry each of the bubbles down to the reaction zone R. The influent fluid flows over the bubble and maximizes the mass transfer between the liquid and gas phases in the reaction zone. Since the oxidation reaction is overall first order, the rate of the reaction is directly proportional to the amount of products and reactants in the liquid. The Taylor bubble provides a smaller hydrodynamic pressure loss inside the flow passage as compared to a swarm of smaller bubbles, thereby reducing the amount of energy required to flow the material at a certain rate through the U-tube structure. Smaller size bubbles create a large hydrodynamic pressure loss throughout the hydraulic column. Also a smaller bubble has a boundary layer of water associated with it which impedes the mass transfer between the two phases. Thus, the Taylor bubble maximizes reaction rates while minimizing horsepower required to pumping the fluid through the pipe system.

To minimize the horsepower required by compressor 71, air is introduced at the top of the outer flow passage 21 at more than one elevation, as shown in Figures 1 and 2. Air is introduced at the highest elevation at the lowest pressure in an amount equal to one volume of air per volume of liquid. As the fluid descends, the pressure increases and the air is compressed. Additional air is injected at a lower elevation and at successively higher pressures, again at an amount equal to one volume of air per volume of liquid. This sequential injection of air at successively greater depths minimizes the compressor requirements and provides the oxygen necessary to oxidize the reactants in the liquid.

The pressure at any point in the reactor depends upon the mass of the fluid above. If only water were used, the pressure gradient would be approximately 9.795 $kNm^{-2}$ per meter of depth. However, the downgoing flow passage 21 contains a substantial volume of gas which is compressed in volume and heated as it travels downwardly.

In summary, by introducing the air at different elevations below the earth's surface, less pumping pressure is required and, once the process is in operation, the downflowing influent fluid material will draw the liquid in without the necessity of a liquid pump. This Taylor bubble configuration minimizes compressor requirements, creates the least amount of pressure differential and increases the flow of reactants and products to and from the fluid, since the fluid flows over the bubble, and there is no boundary layer formed as found in bubbles of smaller size.

The reactor shown in more detail in Figures 5—10 is located inside a well hole, lined with a well casing comprised of an enlarged upper section 81 and a smaller diameter lower section 82 that has grout at 83 outside section 82 throughout the vertical extent of sections 81 and 82, and has a grout plug 84 closing and sealing the bottom of casing section 82. The upper end of well casing section 81 is secured as by welding to a circular base plate 86 recessed to be flush with the ground surface 17.

In general, the outer pipe portion 18 and inner pipe portion 19 are supported in a suspended depending manner from the base plate 86 in such a way as to allow for expansion and contraction thereof relative to the well casing due to temperature changes.

The upper end of the top pipe section of the outer pipe portion 18 is secured as by welding to a circular base plate 87 that rests on base plate 86 to support the outer pipe portion 18 in a suspended depending manner in the casing 82. Two flow pipes 54 and 56 for conveying fluid to and from the coolant jacket 55 extend down through a bushing in the base plate between the well casing and the exterior of the outer pipe portion.

There is further provided above the ground surface level an extension of the outer pipe portion 18 including a straight coupling 89 threaded on external threads of the top subsurface pipe section of outer pipe portion 18 affixed to plate 87 that rests on plate 86, a pipe nipple 91, a tee coupling 92 and a pipe 93 having a flange plate 94 secured as by welding to the upper end with the lower end threaded into the tee coupling 92. A flange plate 95 rests on flange plate 94 and has the upper end of the inner pipe portion 19 secured thereto as by welding so that the inner pipe portion 19 is supported in a suspended depending manner from the outer pipe portion 18 which in turn is supported on plates 86 and 87.

Yet a third top flange plate 96 rests on flange plate 95 and has an upper pipe nipple 97 threaded thereto with a top coupling 98 secured thereto to provide the coupling to the flow line 37 through whith the effluent fluid is passed. There is further shown a gasket 101 between plates 94 and 95 and a gasket 102 between plates 95 and 96, together with a bolt fastener 103 to hold the flange plates together in a sealed watertight manner. The pressure sensing tube 61 is shown as extending down through the center of flange plate 96 and the inner pipe portion 19, which is shown to extend up above the ground surface level to connect to flange plate 95.

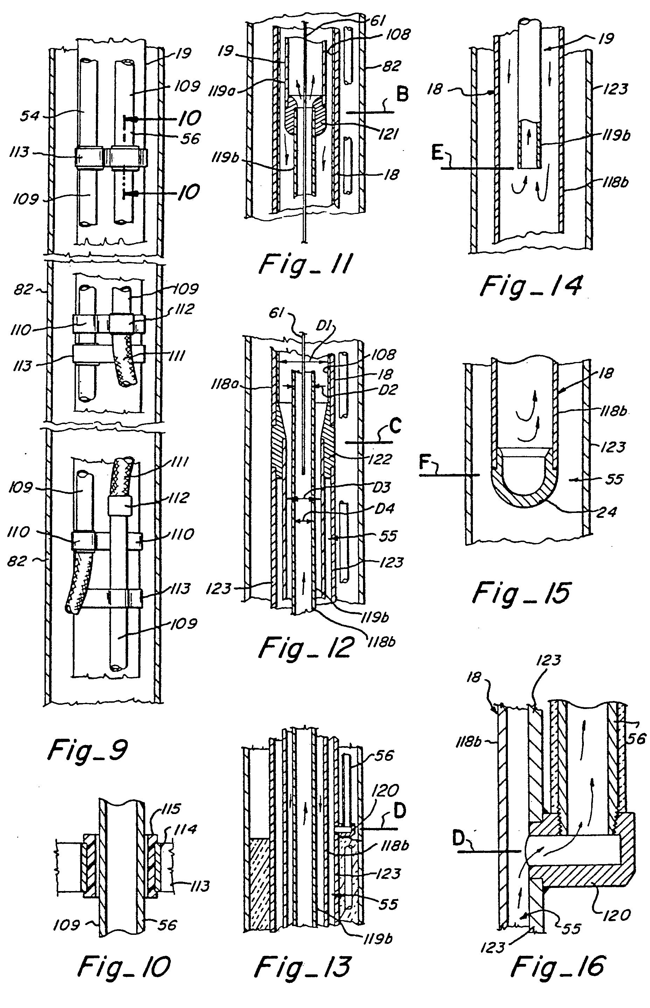

The two flow lines 54 and 56 for conducting the coolant fluid extend from the ground surface down through support plate 87 and are supported on the outer pipe section, as best seen in Figures 9 and 10. Each coolant fluid flow line has a series of alternating pipe sections shown as a relatively long, rigid pipe section 109 on the order of 100 feet and a flexible pipe section or hose 111 on the order of two feet that are joined end-to-end to one another by a coupling 112. The lower end of the rigid pipe portion 109 rests on a support surface provided by a lower bracket 110 clamped to the outer pipe portion 18.

A supporting guide bracket 113 guides the upper end portion of the outer pipe portion 18 in an axial sliding movement and has an annulus 114 which in turn carries a resilient sleeve 115. The rigid pipe section 109 is axially movable in the resilient sleeve to allow for axial movement of these flow lines for contraction and expansion due to temperature changes. Each flexible pipe section 111 is shown in a bowed configuration to allow for expansion and contraction. The coupling 112 on the lower end is slidable with pipe section 109 and the coupling 112 on the upper end is held by bracket 110. The flexible pipe section 111 may be made of a bellows-like conduit covered with a heat-resistant braided cover.

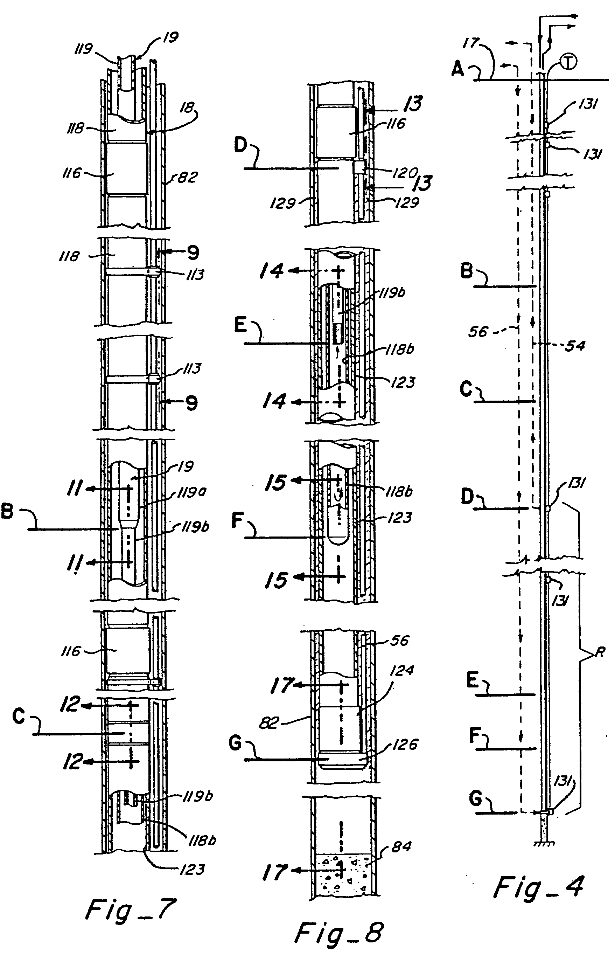

As best seen in Figures 7 and 8, the outer pipe portion 18 extending from ground surface into the hole is made up of a plurality of end-to-end pipe sections 118 connected at adjacent ends by API (American Petroleum Institute) couplings 116. These couplings have a substantial taper at each end and are standard well-type pipe couplings. The pipe sections making up the outer pipe portion 18 above the reaction zone as shown are made of black iron with a stainless steel liner 108 shown in Figures 11 and 12 and extend from the reaction zone up to a depth below the surface level of about 152.4 m (500 feet). This construction prevents corrosion.

In a like manner, the inner pipe portion 19 is made up of a plurality of end-to-end pipe sections 119 connected at adjacent ends by end welds. As shown in Figure 15, the bottom pipe section of the outer pipe portion 18 has a shaped 180 degree turnaround provided by an end cap 24 to prevent plugging by scouring which directs the flow up through the inner pipe portion 19. Since there is no pressure differential across the wall of the inner flow passage, a thin-walled tube is used. Use of a thin-walled tube decreases cost and allows for better heat exchange between the hot reacted effluent fluid and the cool untreated influent fluid.

For reference purposes, the inside diameter of the outer pipe portion 18 above the reaction zone is designated D1, the inside diameter of the inner pipe portion 19 above the reaction zone is designated D2, the inside diameter of the outer pipe portion in the reaction zone is designated D3 and the inside diameter of the inner pipe portion 19 in the reaction zone is designated D4.

The jacket 55 is provided on the outer pipe portion beginning at a selected depth below the ground surface level, which is at the top or beginning of the reaction zone R. At this depth both the outer and inner pipe portions are reduced in size to provide a substantially constant mass flow rate.

As the fluid flows down the outer flow passage, the gas is compressed and as a result the volumetric ratio of gas to liquid decreases with a resulting decrease in the velocity of the liquid. To maintain more nearly constant flow velocity, the outer and inner pipe portions are reduced in size in the area of the reaction zone. This reduction in size increases the amount of production per capital investment and also maintains at least the flow velocity required to sweep the gas bubbles downward.

As shown in Figure 11, an inner pipe section 119a a distance above the reaction zone has a reducing sleeve or coupling 121 along the inside which receives a smaller diameter inner pipe section 119b. In a like manner, as shown in Figure 12, an outer pipe section 118a below coupling 121 and above the reaction zone carries a reducing coupling or sleeve 122 which in turn has an inside cut into which a smaller diameter outer pipe section 118b is fitted. The outer pipe section 118a preferably is black iron lined with a stainless steel tubing 108 above fitting 122 extending up to about 152.4 m below the ground surface. The reduction couplings are preferably made of stainless steel and machined to have a smooth, tapered entrance surface to prevent plugging. A larger outer pipe section 123 fits over an annular outer cut on sleeve 122 with a space between pipe sections 123 and 118b forming the coolant jacket 55 which extends down to the bottom of the reactor.

The heat from the reaction is collected in the jacket 55 and is passed therefrom, or heat may be input, in the form of a heated coolant fluid and/or steam to assist in starting up the reactor. At the upper end of the jacket 55, there is a fitting 120 mounted on pipe section 123 coupling flow from line 56 to the interior of the top portion of the jacket. At the lower end of the outer jacket 55, there is an end cap 124 that cups over the lower end of the outer pipe section 123 forming the jacket and is secured thereto as by threads or welding. End cap 124 has a vertical aperture 125 in the bottom thereof.

A fitting 126 shown in Figures 17, 18 and 19 is secured as by welding to the bottom of the end cap 124 and extends laterally out so as to be offset to one side thereof. The fitting 126 has a passage that opens into the bottom of the jacket and has a hole 127 at one end and couples to flow line 54. The jacket with end cap and fitting terminates a distance above the plug 84 to allow for up-and-down movement thereof relative to plug 84 due to expansion and contraction.

To monitor temperature, temperature sensors in the form of thermocouples 131 shown in Figure 4, are placed on the outer pipe portion at approximately 76.2 m intervals and are connected to a temperature indicator T at the surface level.

A large heat loss can result from the presence of water inside the well casing 81 and 82. Such water will vaporize and rise to a cooler level, where it condenses and then flows down the external wall surface of the reactor until it is vaporized again. This refluxing action reduces the overall energy efficiency and feasibility of the process. To prevent this problem the inside of the casing can be dried by pumping or purging or can be insulated with a layer of insulation indicated at 129, shown in Figures 8, 17 and 18. A plastic-coated fiberglass bat, rock wool or ceramic felt has been found to be effective as an insulation for this purpose which serves as a baffle to prevent conductive and convective heat losses.

The influent fluid which in the specific application described herein is a stream of sewage sludge is pumped from supply 38 via flow lines 31 and 33 into and down the outer flow passage 21. A stream of air under pressure is pumped into the outer flow passage to form a train of spaced Taylor bubbles 78 and the pressure provided by pump 29 is sufficient to move both the influent fluid and bubbles down the outer passage 21. As the two proceed down below the ground surface, the temperature and pressure increase and they reach a point at which oxidation proceeds at an accelerated reaction rate, indicated at line D, and proceeding to the bottom, indicated at line G. The area between lines D and G is designated R.

In the reaction zone R the pressures and temperatures rapidly mix the oxygen with the water to cause a rapid oxidation of the combustible solids and a generating of heat to heat the fluid. Some of the reaction products resulting from the oxidation are $CO_2$, $H_2O$, $N_2$+heat. The heated fluid and reaction products, termed the "effluent fluid", then flow up the inner flow passage 22 in heat exchange relation to the downflowing influent fluid. Upon exiting the reactor, the effluent fluid is flowed through the ash settling tank and then is either used as a diluent for the influent fluid to maintain the proper influent C.O.D. or is discharged via flow line 44.

The blend or concentration of the reactants in relation to one another in relation to the amount of liquid content (water) of the influent fluid is controlled by the settings of valves 72, 74, 76, 43 and 39 relative to one another. It should be noted that each of these controls is adjustable or settable at or in the area of the ground surface level.

During start-up, heat is usually added to the reaction zone to heat the influent fluid by pumping a coolant fluid from tank 52 through heater 53, down flow line 54, through jacket 55, and back up flow line 56. After the temperature rises to about 204.4°C at the upper level of the reaction zone and heat is produced from the ensuing exothermal reaction, the direction of flow of the coolant fluid in lines 54 and 56 is reversed and pumped from the jacket up through flow lines 54 and 54b into the heat exchange unit 58, from which heat or work via a steam turbine generator 60 may be derived or heat may heat the room 67.

Temperature at the start of the reaction is controlled by varying the setting of control 53b and by the flow rate in line 54. Temperature during operation is controlled to maintain the vapor pressure of the influent fluid at the local temperature lower than the local pressure to prevent boiling while maximizing the reaction rate.

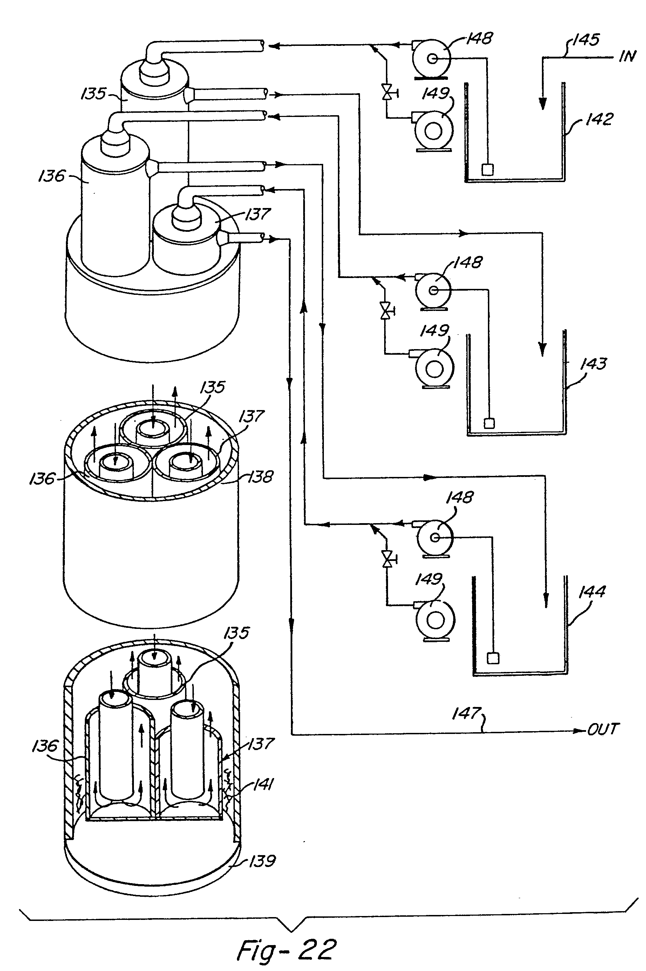

Referring now to Figure 22, there is shown an arrangement of the present invention wherein three subsurface reactors 135, 136 and 137 are mounted in one outer well casing 138 for greater treatment capacity in one vertical hole of shorter depth than would be required for one long reactor. Again the casing has grout lining the inside of the hole and has a grout plug seal 139 at the bottom. The void between the reactors and casing is shown filled with an insulation 141.

As previously described, each reactor has an outer pipe portion and an inner pipe portion with associated input and output ports above the ground surface. In the arrangement shown there is a tank 142 for reactor 135, a tank 143 for reactor 136 and a tank 144 for reactor 137. A fluid pump 148 and an air compressor 149 are associated with each reactor, as previously described. Influent fluid indicated at line 145 and gas under pressure are pumped into tank 142 and from tank 142 down reactor 135 with effluent fluid from reactor 135 to the tank 143. Influent fluid from tank 143 and gas are pumped into reactor 136, with effluent fluid out of reactor 136 pumped into tank 144. Finally, effluent fluid and gas under pressure are pumped from tank 144 into reactor 137 and effluent fluid from reactor 136 is passed to a point of use via line 147.

This arrangement of three reactors coupled in series increases the C.O.D. reduction over a single reactor having the same retention time, apparently due to the fact that the reaction product $CO_2$ can be removed via the tanks 142, 143.

Some typical ranges are listed in the following table:

## TABLE

| | Example | Range |
|---|---|---|
| **1. Reactor** | | |
| Above Reaction Zone Diameter | | |
|     Outer Pipe Portion D1 (cm) | ID 6.261 | 2.54 to 60.96 |
|     Inner Pipe Portion D2 (cm) | ID 3.962 | 1.905 to 50.8 |
| Reaction Zone Diameter | | |
|     Outer Pipe Portion D3 (cm) | ID 4.750 | 1.905 to 50.8 |
|     Inner Pipe Portion D4 (cm) | ID 2.527 | 1.27 to 45.72 |
| Total Dept (m) | 457.2 | 304.8 to 1828.8 |
| Dept to Start Reaction Zone (m) | 304.8 | 152.4 to 1371.6 |
| Length of Reaction Zone R (m) | 152.4 | 152.4 to 914.4 |
| Temperature at Top of Reaction Zone (°C) | 232.2 | 148.9 to 287.8 |
| Temperature at Bottom of Reaction Zone (°C) | 243.3 | 148.9 to 343.3 |
| Pressure at Top of Reaction Zone ($kN \cdot m^{-2}$) | 2827 | 1379 to 13307 |
| Pressure at Bottom of Reaction Zone ($kN \cdot m^{-2}$, absolute) | 4482 | 2986 to 17927 |
| | | |
| **2. Influent Fluid with Reactants** | | |
| Sewage Sludge Waste Stream | | |
|     C.O.D. (mg/l) | 7600 | 0 to 20000 |
|     Pressure (surface) (absolute) $kN \cdot m^{-2}$ | 0 | 0 to 1379 |
|     Temperature (°C) | Atmos. Ambient | Atmos. Ambient |
|     Flow Rate ($l \cdot s^{-1}$) | About 0.189 | 0 to 31.545 |
|     Air | | |
|         Pressure $kN \cdot m^{-2}$ | 690 | 0 to 1379 |
|         Temperature °C | Atmos. Ambient | Atmos. Ambient |
|         Flow Rate ($l \cdot s^{-1}$) | $7.173 \times 10^{-4}$ | 0 to 0.2360 |
|         Bubble Velocity $m \cdot s^{-1}$ | .213 | 0.152 to 0.762 |
| | | |
| **3. Effluent Fluid** | | |
| Pressure—$kN \cdot m^{-2}$ (absolute) | 552 | 0 to 1379 |
| Temperature °C | Atmos. Ambient | Atmos. Ambient |
| Flow Rate | About 0.189 | 0 to 31.545 |
| | | |
| **4. Output** | | |
| Energy $kJ \cdot Day^{-1}$ | $0.707 \times 10^6$ | 0 to $10 \times 10^8$ |
| C.O.D. Reduction | 70% | 0 to 99% |
| Amount Throughput $kg\ C.O.D. \cdot Day^{-1}$ | 50.8 | 45.3 to 45359 |
| Flow Rate ($l \cdot s^{-1}$) | 0.189 | 0 to 31.545 |
| Raw Sewage Equivalent* ($m^3 \cdot D-1$) | 272.5 | 170.3 to 30202 |

*at 707.6 kg/C.O.D. per 3,785 $m^3 \cdot Day^{-1}$.

Industrial applicability

In summary, the method and apparatus of the present invention accomplish a high temperature, high pressure, chemical reaction including the wet oxidation of sewage sludge and other fluid waste but require only low pressure pumping apparatus. Both the initial costs and the operating costs are considerably less than other known methods and apparatus achieving similar end results. In addition, the method and apparatus of the present invention require a minimum of low skill maintenance and produce energy in the form of a high quality steam. The invention achieves essentially a 100% destruction of all living organisms and about 98% reduction in the C.O.D., is odorless, and produces a readily dewaterable ash end product.

In the present invention all of the control is in the area of the ground surface, there is a minimum power requirement for pumping relatively large quantities of fluids, and there is a continuous downflowing and upflowing fluid flow throughput. The method and apparatus disclosed is suitable for carrying out high-temperature, high-pressure chemical reactions as, for example, in the cracking of petroleum products and for carrying out high-temperature, high-pressure hydrogenation such as in the forming of ammonia in which case the enlarged bubbles would not be necessary.

**Claims**

1. A method for effecting accelerated chemical reactions between at least two reactants comprising flowing an influent fluid with at least two reactants downwardly through a downgoing flow passage at a selected flow rate to a selected depth below the ground surface in a subterranean hole to form a hydrostatic column of fluid exerting a pressure and provide a temperature sufficient to cause the reactants at said selected depth to react in a reaction at an acclerated reaction rate and flowing the heated fluid and reaction products back up to substantially ground surface level in an upgoing flow passage in heat exchange relation to the downflowing fluid as an effluent fluid, characterised by passing said fluid further down through a reaction zone extending through said downgoing flow passage a selected distance below said selected depth whereby reaction products are produced and the fluid is heated in said reaction zone, by said reaction being carried out with said downgoing and upgoing flow passages suspended from above in said subterranean hole and in spaced relation to said hole and by controlling the temperature of the influent fluid in said reaction zone by adding heat to or removing heat from said influent fluid substantially in the area of said reaction zone to accomplish a maximum reaction rate with the vapor pressure of the influent fluid at the local temperature being maintained always lower than the local pressure to prevent boiling of said influent fluid.

2. A method as set forth in claim 1 wherein one of said reactants is a stream of gas introduced under a selected pressure into the influent fluid substantially at the ground surface level through an outlet facing the downstream end of said downgoing flow passage to form a series of enlarged gas bubbles that are carried down with the influent fluid to cause intense mixing and contacting and maximize the reaction in the reaction zone and reduce pumping requirements.

3. A method as set forth in claim 1 wherein one of said reactants is a gas that is introduced at a plurality of selected depth intervals below the ground surface level as successive streams at progressively higher pressures.

4. A method as set forth in claim 1 wherein the pressure of the influent fluid at substantially the ground surface level is in the range of about 0 to 1379 $kN \cdot m^{-2}$ at substantially atmospheric, ambient temperatures with a continuous downflowing and upflowing fluid flow throughput.

5. A method as set forth in claim 1 including the step of controlling the pressure and flow rate of the influent fluid and effluent fluid at substantially ground surface level.

6. A method as set forth in claim 1 including the step of controlling the concentration of said reactants in relation to one another and in relation to the amount of liquid content of the influent fluid.

7. A method as set forth in claim 1 wherein said effluent fluid is successively recycled back down as influent fluid and up as effluent fluid in a succession of downgoing and upgoing flow passages disposed in a common hole coupled in series for carrying out a succession of chemical reactions on a continuous stream of fluid, the effluent fluid from each successive reactor being passed into a tank open to the atmosphere to remove gaseous reaction products.

8. A method as set forth in claim 1 wherein said influent fluid is sewage sludge delivered to the downgoing flow passage at a selected flow rate and selected pressure and one of said reactants is air with oxygen to perform the wet oxidation of sewage sludge.

9. A method as set forth in claim 1 including adding heat to said influent fluid substantially in the area of said reaction zone to initiate the reaction.

10. Apparatus for effecting accelerated chemical reactions comprising a reactor disposed in a subterranean hole and including first and second pipe portions defining a downgoing flow passage and an upgoing flow passage said downgoing flow passage extending from substantially the ground surface to a depth sufficient to cause a downflowing fluid therein in use to form a hydrostatic column of fluid to exert a pressure and provide a temperature sufficient to cause two reactants in the fluid at said selected depth to react at an accelerated rate, and means for pumping an influent fluid with at least two reactants from substantially the ground surface level through said downgoing and upgoing passages whereby, in use, an effluent fluid with reaction products is passed from said reactor characterised in that said reactor is suspended from above in said subterranean hole and in spaced relation to said hole, in that said downgoing flow passage extends down from said selected depth to form a reaction zone whereby, in use reaction products are produced and said fluid is heated in said reaction zone, and in that means are provided for controlling, in use the temperature of the influent fluid in said reaction zone by adding heat to or removing heat from the influent fluid in the area of the reaction zone to maintain, in use, a substantially maximum reaction rate without boiling of the fluid in said reaction zone.

11. Apparatus as set forth in claim 10 wherein said first and second pipe portions are arranged with one in concentric spaced relation within the other with the outer pipe portion being closed at the bottom forming a hydraulic flow-through U-tube.

12. Apparatus as set forth in claim 10 wherein said reactor is disposed in a subterranean cased hole providing a subterranean housing for but separate from said reactor.

13. Apparatus as set forth in claim 10 wherein said first and second pipe portions are supported in a depending manner from a common support plate at the ground surface level.

14. Apparatus as set forth in claim 10 wherein said pipe portions are reduced in size at a selected depth below the ground surface substantially at the upper limit of the reaction zone to maintain a substantially constant velocity through said pipe portions.

15. Apparatus as set forth in claim 10 including pumping means in the area of the ground surface level for flowing the fluid through said upgoing and downgoing flow passages in a continuous throughput flow.

16. Apparatus as set forth in claim 10 wherein said means for controlling the temperature of the influent fluid includes a jacket with an inner annular passage surrounding and in heat exchange relation to the outer of said pipe portions through which a coolant fluid is, in use pumped and further includes a pair of flow lines coupled to said jacket and extending up to the ground surface level to circulate a fluid to and from said jacket to the ground surface level.

17. Apparatus as set forth in claim 16 including a tank, a pump, a heat exchanger, a control valve, and a heat source in the area of the ground surface level coupled in a fluid flow circuit with said jacket and flow lines for heating and pumping a heated fluid into said jacket in one mode of operation and for pumping heated fluid from the jacket through said heat exchanger in another mode of operation to control the temperature of the fluid in said reaction zone.

18. Apparatus as set forth in claim 10 including means for introducing a stream of gas under a selected pressure into the downgoing flow passage in the area of the ground surface level to form, in use, enlarged gas bubbles commonly known as Taylor bubbles, characterized by a generally cylindrical main body portion, a generally spherical cap portion, and a truncated portion opposite said cap, that are pumped down with the influent fluid.

19. Apparatus as set forth in claim 18 including a plurality of inlets for said stream of gas located at spaced selected distances below the ground surface level.

20. Apparatus as set forth in claim 18 wherein said means for introducing a stream of gas includes a terminal pipe section in the downgoing flow passage arranged longitudinally of the passage with an outlet opening toward the downstream end of said downgoing flow passage.

21. Apparatus as set forth in claim 10 including a plurality of reactors disposed side-by-side in a single well casing, said reactors being flow-coupled in a series relationship with the influent fluid being passed, in use, into one of said reactors and the effluent fluid from said one reactor into the next reactor to successively recycle the fluid back down for further reaction for carrying out a succession of chemical reactions on a continuous stream of fluid.

**Patentansprüche**

1. Verfahren zur Bewirkung beschleunigter chemischer Reaktionen zwischen wenigstens zwei Reaktionsteilnehmern, wobei ein zuströmendes Fluid mit wenigstens zwei Reaktionsteilnehmern abwärts durch eine nach unten gehende Strömungspassage mit einer ausgewählten Strömungsrate bis zu einer ausgewählten Tiefe unter der Erdoberfläche fließt, um eine einen Druck ausübende hydrostatische Fluidsäule zu bilden und eine Temperatur zu liefern, die ausreichen zu bewirken, daß Reaktionsteilnehmer die ausreichen zu bewirken, daß Reaktionsteilnehmer in der ausgewählten Tiefe in einer Reaktion mit einer beschleunigten Reaktionsgeschwindigkeit reagieren, und wobei das erwärmte Fluid und die Reaktionsprodukte zurück nach oben bis im wesentlichen in Höhe der Erdoberfläche in einer nach oben gehenden Strömungspassage in Wärmeaustauschrelation mit dem abwärts strömenden Fluid als ein ausströmendes Fluid strömen, dadurch gekennzeichnet, daß das Fluid weiter nach unten durch eine Reaktionszone strömt, die sich durch die nach unten gehende Strömungspassage unterhalb der ausgewählten Tiefe in einem ausgewählten Abstand von dieser Tiefe erstreckt, wodurch Reaktionprodukte erzeugt werden und das Fluid in der Reaktionszone erwärmt wird, daß die Reaktion mit den nach unten und nach oben gehanden, von oben in das unterirdische Loch hängenden und mit Abstand von dem Loch angeordneten Strömungspassagen ausgeführt wird, und daß die Temperatur des zuströmenden Fluids in der Reaktionszone durch Zugabe oder Entnahme von Wärme zu oder aus dem zuströmenden Fluid im wesentlichen in dem Bereich der Reaktionszone zur Erreichung einer maximalen Reaktionsgeschwindigkeit durch Zugabe oder Entnahme von Wärme zu oder aus dem zuströmenden Fluid im wesentlichen in dem Bereich der Reaktionszone gesteuert wird, wobei der Dampfdruck des zuströmenden Fluids bei der lokalen Temperatur immer niedriger als der lokale Druck gehalten wird, um ein Sieden des zuströmenden Fluids zu vermeiden.

2. Verfahren nach Anspruch 1, wobei einer der Reaktionsteilnehmer ein Gasstrom ist, der unter einem ausgewählten Druck in das zuströmende Fluid im wesentlichen in Höhe der Erdoberfläche durch einen dem stromabwärtigen Ende der nach unten gehenden Strömungspassage zugekehrten Auslaß zur Bildung einer Reihe von ausgedehnten Gasblasen eingeführt wird, die mit dem zuströmenden Fluid nach unter getragen werden, um eine intensive Mischung und Berührung und eine Maximierung der Reaktion in der Reaktionszone zu bewirken und notwendigen Pumpenaufwand zu reduzieren.

3. Verfahren nach Anspruch 1, wobei einer der Reaktionsteilnehmer ein Gas ist, das bei einer Anzahl ausgewählter Tiefenintervalle unter der Erdoberflächenhöhe als sukzessive Ströme bei fortlaufend höher werdenden Drücken eingeführt wird.

21 **0 0 1 8 3 6 6** 22

4. Verfahren nach Anspruch 1, wobei der Druck des einströmenden Gases im wesentlichen bei der Erdoberflächenhöhe im Bereich von etwa 0 bis 1379 kNm$^{-2}$ bei im wesentlichen atmosphärischen Umgebungstemperaturen bei einem kontinuierlichen abwärts und aufwärts strömenden Fluidströmungsdurchsatz liegt.

5. Verfahren nach Anspruch 1 mit dem Schritt der Steuerung des Druckes und der Strömungsrate des zu- und ausströmenden Fluids im wesentlichen in Erdoberflächenhöhe.

6. Verfahren nach Anspruch 1 mit dem Schritt der Steuerung der Konzentration der Reaktionsteilnehmer in Relation zueinander und in Relation zum Betrag des flüssigen Gehalts des zuströmenden Fluids.

7. Verfahren nach Anspruch 1, wobei das ausströmende Fluid sukzessive zurück nach unten als zuströmendes Fluid und nach oben als ausströmendes Fluid in einer Aufeinanderfolge von nach unten und nach oben gehenden, in einem gemeinsamen Loch angeordneten Strömungspassagen umgewälzt wird, die zur Durchführung einer Aufeinanderfolge von chemischen Reaktionen in einem kontinuierlichen Fluidstrom in Reihe geschaltet sind, wobei das ausströmende Fluid aus jedem der aufeinanderfolgenden Reaktoren in einen Tank fließt, der zur Entfernung gasförmiger Reaktionsprodukte gegen die Atmosphäre offen ist.

8. Verfahren nach Anspruch 1, wobei das einströmende Fluid Klärschlamm ist, welcher der abwärts gehenden Strömungspassage mit einer ausgewählten Strömungsrate und einem ausgewählten Druck zugeführt wird, und wobei einer der Reaktionsteilnehmer Luft mit Sauerstoff zur Durchführung der nassen Oxidation von Klärschlamm ist.

9. Verfahren nach Anspruch 1 mit der Zugabe von Wärme zu dem zuströmenden Fluid im wesentlichen in dem Bereich der Reaktionszone zum Einleiten der Reaktion.

10. Apparat zur Bewirkung beschleunigter chemischer Reaktionen, mit einem in einem unterirdischen Loch angeordneten Reaktor, der einen ersten und zweiten Rohrabschnitt aufweist, die eine nach unten gehende Strömungspassage und eine nach oben gehende Strömungspassage definieren, wobei die nach unten gehende Strömungspassage sich von im wesentlichen der Erdoberfläche bis zu einer Tiefe erstreckt, die ausreicht, im Gegrauch ein darin nach unten strömendes Fluid zu bewirken, um eine hydrostatische Fluidsäule zur Ausübung eines Druckes zu bilden und eine Temperatur zu liefern, die ausreicht, um zu bewirken, daß zwei Reaktionsteilnehmer in dem Fluid bei der ausgewählten Tiefe mit einer beschleunigten Rate reagieren, und mit einer Einrichtung zum Pumpen eines zuströmenden Fluids mit wenigstens zwei Reaktionsteilnehmern aus im wesentlichen der Erdoberflächenhöhe durch die nach unten gehende und die nach oben gehende Passage, wobei oder wodurch in Gebrauch ein ausströmendes Fluid mit Reaktionsprodukten aus dem Reaktor ausströmt, dadurch gekennzeichnet, daß der Reaktor von oben in das unterirdische Loch gehängt und von dem Loch beabstandet ist, daß die nach unten gehende Strömungspassage sich von der ausgewählten Tiefe nach unten erstreckt, um eine Reaktionszone zu bilden, wobei im Gebrauch Reaktionsprodukte erzeugt werden und das Fluid in der Reaktionszone erwärmt wird, und daß eine Einrichtung zur Steuerung der Temperatur des zuströmenden Fluids in der Reaktionszone im Gebrauch durch Zugabe oder Entnahme von Wärme zu oder von dem zuströmenden Fluid in dem Bereich der Reaktionszone, um im Gebrauch eine im wesentlichen maximale Reaktionsrate ohne Sieden des Fluids in der Reaktionszone zu erhalten.

11. Apparat nach Anspruch 10, wobei der erste und zweite Rohrabschnitt konzentrisch ineinander und voneinander beabstandet angeordnet sind, wobei der äußere Rohrabschnitt am Boden geschlossen ist und ein U-förmiges hydraulisches Strömungsdurchgangsrohr bildet.

12. Apparat nach Anspruch 10, wobei der Reaktor in einem höhlenförmigen unterirdischen Loch angeordnet ist, das für den Reaktor ein unterirdisches, aber davon getrenntes Gehäuse bildet.

13. Apparat nach Anspruch 10, wobei der erste und zweite Rohrabschnitt von einer gemeinsamen Trägerplatte in Erdoberflächenhöhe herabhängend gehalten sind.

14. Apparat nach Anspruch 10, wobei die Rohrabschnitte in einer ausgewählten Tiefe unter der Erdoberfläche im wesentlichen an der oberen Grenze der Reaktionszone größenmäßig reduziert sind, um eine im wesentlichen konstante Geschwindigkeit durch die Rohrabschnitte beizubehalten.

15. Apparat nach Anspruch 10, mit einer Pumpeinrichtung im Bereich der Erdoberflächenhöhe zum Strömenlassen des Fluids durch die nach oben gehende und die nach unten gehende Strömungspassage in einem kontinuierlichen Strömungsdurchsatz.

16. Apparat nach Anspruch 10, wobei die Einrichtung zur Steuerung der Temperatur des zuströmenden Fluids ein Gehäuse mit einer das Äußere der Rohrabschnitte umgebenden und in Wärmeaustauschbeziehung mit diesem Äußeren stehende Passage aufweist, durch die im Gebrauch ein Kühlfluid gepumpt wird und weiter ein Paar Strömungsleitungen aufweist, die an des Gehäuse gekoppelt sind und sich nach oben bis zur Erdoberfläche erstrecken, zur Zirkulation eines Fluids zu und von dem Gehäuse zur Erdoberflächenhöhe.

17. Apparat nach Anspruch 16, mit einem Tank, einer Pumpe, einem Wärmeaustauscher, einem Steuerventil und einer Wärmequelle im Bereich der Erdoberflächenhöhe, die in einen Fluidströmungskreis mit dem Gehäuse und den Strömungsleitungen geschaltet sind, um ein Fluid zu erwärmen und ein erwärmtes Fluid in das Gehäuse in einer Betriebsweise zu pumpen und um ein erwärmtes Fluid aus dem Gehäuse durch den Wärmeaustauscher in einer anderen Betriebsweise zu pumpen, zur Steuerung der Temperatur des Fluids in der Reaktionszone.

18. Apparat nach Anspruch 10, mit einer Einrichtung zum Einleiten eines Stromes eines Gases unter einem ausgewählten Druck in die nach unten gehande Strömungspassage in dem Bereich der Erdoberflächenhöhe, um im Gebrauch ausgedehnte Gasblasen—allgemein als Taylor-Blasen bekannt—zu bilden, gekennzeichnet durch einen im allgemeinen zylindrischen Hauptkörperteil, einen im allgemeinen sphärischen Kappenteil und einen stumpfen Teil gegenüber der Kappe, die mit dem zuströmenden Fluid nach unten gepumpt werden.

19. Apparat nach Anspruch 18, mit einer Anzahl von Einlassen für den Gasstrom, die unter der Erdoberflächenhöhe in ausgewählten Abständen beabstandet sind.

20. Apparat nach Anspruch 18, wobei die Einrichten zum Einleiten eines Gasstromes einen Rohrendabschnitt in der nach unten gehende Strömungspassage enthält, der in Längsrichtung der Passage angeordnet ist, und eine dem stromabwärtigen Ende der nach unten gehenden Strömungspassage zugekehrte Auslaßöffnung aufweist.

21. Apparat nach Anspruch 10 mit einer Anzahl Reaktoren, die seitlich nebeneinander in einem einzigen Schacht-oder Bohrlochgehäuse angeordnet sind, wobei die Reaktoren in Serienrelation mit dem zuströmenden Fluid strömungsgekoppelt sind, das im Gebrauch in einen der Reaktoren geleitet wird, und das ausströmende Fluid von diesem einen Reaktor in den nächsten Reaktor, um das Fluid sukzessive zurück nach unten für eine weitere Reaktion umzuwälzen, um eine Folge von chemischen Reaktionen auf einem kontinuierlichen Fluidstrom auszuführen.

**Revendications**

1. Un procédé pour effectuer des réactions chimiques accélérées entre au moins deux réactifs, consistant à faire passer un fluide affluent avec au moins deux réactifs vers le bas à travers un passage à écoulement vers le bas à une vitesse d'écoulement choisie jusqu'à une profondeur choisie sous la surface du sol dans un trou souterrain de façon à former une colonne hydrostatique de fluide exerçant une pression et à fournir une température suffisante pour provoquer la réaction des réactifs à la profondeur choisie à une vitesse de réaction accélérée, et à faire revenir le fluide chauffé et les produits de réaction jusqu'à environ la surface du sol dans un passage à écoulement vers le haut, en relation d'échange thermique avec le fluide s'écoulant vers le bas, en tant que fluide effluent, caractérisé en ce qu'on fait passer ledit fluide encore vers le bas à travers une zone de réaction s'étendant à travers ledit passage à écoulement vers le bas sur une distance choisie en-dessous de ladite profondeur choisie, grâce à quoi les produits de réaction sont obtenus et le fluide est chauffé dans ladite zone de réaction, ladite réaction étant effectuée avec lesdits passages à écoulement vers le bas et vers le haut suspendus à partir du dessus dans ledit trou souterrain et espacés des parois dudit trou, et en ce qu'on règle la température du fluide affluent dans ladite zone de réaction par addition de chaleur audit fluide affluent ou élimination de chaleur de ce dit fluide pratiquement dans le domaine de la zone de réaction afin d'obtenir des vitesses de réaction maximales, la pression de vapeur du fluide affluent à la température locale étant maintenue toujours inférieure à la pression locale pour éviter l'ébullition dudit fluide affluent.

2. Un procédé selon la revendication 1 dans lequel l'un des réactifs est un courant de gas introduit sous une pression choisie dans le fluide affluent pratiquement à la surface du sol à travers un orifice de sortie dirigé vers l'extrémité inférieure dudit passage à écoulement vers le bas de façon à former une série de bulles de gaz de grandes dimensions qui sont entraînées avec le fluide affluent de façon à provoquer un mélange et une mise en contact intenses et à rendre maximum la réaction dans la zone de réaction et à réduire les besoins de pompage.

3. Un procédé selon la revendication 1 dans lequel l'un des réactifs est un gaz qui est introduit à plusieurs intervalles de profondeur choisis inférieurs au niveau du sol sous forme de plusieurs courants successifs à des pressions progressivement plus élevées.

4. Un procédé selon la revendications 1 dans lequel la pression du fluide affluent au niveau pratiquement du sol est dans la gamme d'environ 0 à 1379 $KN \cdot m^{-2}$ à la température ambiante pratiquement atmosphérique avec un débit continu de fluide s'écoulant vers le bas et vers le haut.

5. Un procédé selon la revendication 1 comprenant le stade consistant à régler la pression et la vitesse d'écoulement du fluide affluent et du fluide effluent pratiquement à la surface du sol.

6. Un procédé selon la revendication 1 comprenant le stade consistant à régler la concentration desdits réactifs l'un par rapport à l'autre et par rapport à la quantité de liquide présent dans le fluide affluent.

7. Un procédé selon la revendication 1 dans lequel ledit fluide effluent est succesivement recyclé vers le bas comme fluide affluent et vers le haut comme fluide effluent dans une succession de passages à écoulement vers le bas et vers le haut disposés dans un trou commun et qui sont couplés en série pour effectuer une succession de réactions chimiques sur un courant continu de fluide, le fluide effluent de chaque réacteur successif passant dans un réservoir ouvert à l'atmosphère afin d'éliminer les produits de réaction gazeux.

8. Un procédé selon la revendication 1 dans lequel ledit fluide affluent est une boue résiduaire amenée au passage à écoulement vers le bas à une vitesse d'écoulement choisie et une pression choisie et l'un desdits réactifs est l'air avec de l'oxygène pour effectuer l'oxydation par voie humide de ladite boue.

9. Un procédé selon la revendication 1 comprenant l'addition de chaleur audit fluide affluent pratiquement dans le domaine de la zone de réaction de façon à initier la réaction.

10. Appareil pour effectuer des réactions chimiques accélérées comprenant un réacteur disposé dans un grou souterrain et comprenant des portions d'un premier et d'un second tuyaux définissant un passage à écoulement vers le bas et un passage à écoulement vers le haut, ledit passage à écoulement vers le bas s'étendant depuis pratiquement la surface du sol jusqu'à une profondeur suffisante pour qu'un fluide s'écoulant vers le bas à l'intérieur, lors de l'utilisation, forme une colonne hydrostatique de fluide de façon à exercer une pression et de façon à fournir une température suffisante pour provoquer la réaction des deux réactifs dans le fluide à ladite profondeur choisie à une vitesse accélérée, et des moyens pour pomper un fluide affluent comprenant au moins deux réactifs à partir de pratiquement la surface du sol à travers lesdits passages à écoulement vers le bas et à écoulement vers la haut, grâce à quoi lors de l'utilisation, un fluide effluent comprenant des produits de réaction est obtenu à partir dudit réacteur, caractérisé en ce que ledit réacteur est suspendu à partir du dessus dans ledit grou souterrain et espacé par rapport aux parois dudit trou, en ce que ledit passage à écoulement vers le bas s'étend vers le bas à partir de ladite profondeur choisie de façon à former une zone de réaction grâce à laquelle lors de l'utilisation des produits de réaction sont obtenus et ledit fluide est chauffé dans la zone de réaction, et en ce que des moyens sont prévus pour régler lors de l'utilisation la température du fluide affluent dans ladite zone de réaction par addition de chaleur au fluide affluent ou élimination de chaleur de ce fluide dans le domaine de la zone de réaction, de façon à maintenir lors de l'utilisation une vitesse de réaction pratiquement maximale sans ébullition du fluide dans ladite zone de réaction.

11. Appareil selon la revendication 10 dans lequel les portions des premier et second tuyaux sont disposées de façon concentrique l'un par rapport à l'autre, la portion de tuyau extérieure étant fermée à son fond et formant un tube à écoulement hydraulique en U.

12. Appareil selon la revendication 10 dans lequel ledit réacteur est disposé dans un trou tubé souterrain fournissant un logement souterrain pour ledit réacteur mais séparé de celui-ci.

13. Appareil selon la revendication 10 dans lequel les portions du premier et du deuxième tuyaux sont supportées de manière dépendante à partir d'une plaque de support commune à la surface du sol.

14. Appareil selon la revendication 10 dans lequel les portions de tuyau ont un diamètre réduit à une profondeur choisie inférieure à la surface du sol pratiquement à la limite supérieure de la zone de réaction de façon à maintenir une vitesse pratiquement constante à travers lesdites portions de tuyau.

15. Appareil selon la revendication 10 comprenant des moyens de pompage dans la zone de la surface du sol pour faire passer le fluide à travers les passages à écoulement vers le haut et vers le bas avec un débit continu.

16. Appareil selon la revendication 10 dans lequel lesdits moyens pour régler la température du fluide affluent comprennent une enveloppe possédant un passage annulaire interne entourant et en relation d'échange thermique avec l'extérieur desdites portions de tuyau, à travers laquelle est pompé un fluide réfrigérant lors de l'utilisation, et comprennent en outre une paire de conduits reliés à ladite enveloppe et s'étendant jusqu'à la surface du sol de façon à faire circuler le fluide vers ladite enveloppe et à partie d'elle jusqu'à la surface du sol.

17. Appareil selon la revendication 16 comprenant un réservoir, une pompe, un échangeur de chaleur, une vanne de réglage et une source de chaleur dans la zone de la surface du sol reliés dans un circuit d'écoulement de fluide avec ladite enveloppe et lesdits conduits pour chauffer et pomper un fluide chauffé dans ladite enveloppe dans un mode de fonctionnement et pour pomper du fluide chauffé à partir de ladite enveloppe à travers ledit échangeur de chaleur dans un autre mode de fonctionnement de façon à régler la température du fluide dans ladite zone de réaction.

18. Appareil selon la revendication 10 comprenant des moyens pour introduire un courant de gaz sous une pression choisie dans le passage à écoulement vers le bas dans la zone de la surface du sol afin de former lors de l'utilisation des bulles de gaz de grandes dimensions communément connues sous le nom de bulles de Taylor, caractérisées par une partie de corps principal généralement cylindrique, une partie supérieure généralement sphérique et une partie tronquée opposée à ladite partie supérieure, qui sont pompées vers le bas avec le fluide affluent.

19. Appareil selon la revendication 18 comprenant plusieurs orifices d'introduction d'un courant de gaz disposés à des distances espacées choisies sous la surface du sol.

20. Appareil selon la revendication 18 dans lequel lesdits moyens pour introduire un courant de gaz comprennent une section de tuyau terminale dans ledit passage à écoulement vers le bas disposée longitudinalement par rapport au passage avec un orifice de sortie dirigé vers l'extrémité inférieure dudit passage à écoulement vers le bas.

21. Appareil selon la revendication 10 comprenant plusieurs réacteurs disposés côte à côte dans un seul tubage de puits, lesdits réacteurs étant couplés en série, le fluide affluent passant lors de l'utilisation dans l'un desdits réacteurs et le fluide effluent de ce dit réacteur dans le réacteur suivant de façon à recycler successivement le fluide vers le bas pour une autre réaction et effecteur ainsi une succession de réactions chimiques sur un courant continu de fluide.

*Fig_1*

Fig _ 2

Fig _ 3

Fig _ 5

Fig _ 6

Fig_7

Fig_8

Fig_4

0 018 366

Fig_11

Fig_14

Fig_9

Fig_12

Fig_15

Fig_10

Fig_13

Fig_16

4

Fig-17

Fig-18

Fig-19

Fig-20

Fig-21

Fig- 22